# EUROPEAN PATENT SPECIFICATION

(11) **EP 0 414 390 B1**
(45) Date of publication and mention of the grant of the patent: **11.09.1996**
(21) Application number: 90308430.9
(22) Date of filing: 31.07.1990
(51) Int. Cl.: G06K 7/06, G07F 7/08

(54) **Card reader**
Kartenleser
Lecteur de cartes

(30) Priority: 19.08.1989 GB 8918957
(43) Date of publication of application: 27.02.1991
(73) Proprietor: NOKIA MOBILE PHONES (U.K.) LIMITED, Camberley, Surrey GU15 3SP (GB)
(72) Inventor: Dearden, Laban, Owlsmoor, Camberley, Surrey GU15 3SP (GB)
(74) Representative: Frain, Timothy John

(56) References cited:
- EP-A- 0 139 593
- EP-A- 0 167 356
- EP-A- 0 255 435
- EP-A- 0 293 888
- EP-A- 0 316 699
- EP-A- 0 316 700
- EP-A- 0 318 213
- EP-A- 0 325 458
- EP-B- 0 186 737
- GB-A- 2 124 420
- GB-A- 2 210 717
- US-A- 4 687 268

## Description

This invention relates to a card reader for reading a card comprising information storage means and contact pads connected thereto which enable stored information to be read from the card.

The card may be, for example, a so-called "smart card" which is usually slightly thicker than a conventional plastic credit card and which includes an integrated circuit device, commonly referred to as a "chip" in which information is stored. For this reason such cards are also often known as "chip cards". The integrated circuit or chip is connected to contact pads on the card and these contact pads are engaged by contacts in the card reader to enable the card to be read.

Our co-pending European Patent Application No. 89306625, published as EP-A-0 351 103 and which constitutes prior art under Article 54(3) EPC, discloses a very slim and generally compact card reader for use with a smart card. A carriage is slidably mounted in a chassis and an abutment supports and guides the card as it is inserted into the reader. Card reading contacts are supported by a plinth which is spaced from the card when the carriage is in an initial card receiving position. Insertion of a card into the reader causes the carriage to slide along a lazy Z-shaped path generally in the direction of card insertion towards a final card reading position and the carriage thus presses the card against the abutment causing the card to bend so that the contact pads are urged into engagement with the contacts on the plinth. Deflectable fingers on the carriage or the chassis grip the card and help to retain both the card and the carriage in the card reading position.

Although the card reader of European Patent Application No. 89306625 includes means which are effective to retain the card in the card reading position, it has been found that under some circumstances, particularly when the card reader is incorporated in portable equipment such as, for example, a pocket-sized cellular radio telephone, the card may work lose from the card reading; position during use especially if it is subject to shock or vibration.

British patent application GB-A-2,124,420 discloses a card reader having a slider member movably mounted within the card reader housing, so as to be engageable by the leading end of the card as the card is manually moved to a card reading position. A frictional drag means engageable with the card is provided for frictionally resisting separation of the card from ar abutment member of the slider member. The frictional drag means is in the form of a roller which is preferably formed by a rubber sleeve on a cylindrical metal or plastics core, and a resilient mounting in the form of a bent wire spring member for supporting the roller adjacent an entrance slot of the card reader. The roller 27 is thus resiliently urged against the card when the card is inserted into the card reader and exerts a frictional drag against the card movement. The resiliently mounted roller is however a relatively cumbersome mechanism and is not conducive to a compact card reader design.

US-A-4,687,268 discloses a card reader having lateral slots for guiding a card to the card reading position. A relatively substantial strip of rubber shown having a semi-circular cross section and extending transversely to the slots is provided to rub against the underside of the card in order to clean the contact pads thereon. The rubber strip also helps to hold the card in its final (card reading) position.

According to the present invention there is provided a card reader for reading a card comprising information storage means and contact pads connected thereto,the card reader comprising
entrance means for inserting the card,
a plurality of contacts for engaging the contact pads on the card to enable electrical connections to be made for reading information from the card,
means for guiding the card to a card reading position whereat the contacts engaga the contact pads on the card, and
a substantially rigid bearing surface against which the card bears during movement of the card to the card reading position, wherein
the bearing surface comprises a coating of compliant material offering non-abrasive resistance to the movement of the card thereover.

A card reader in accordance with the present invention, which may have a particularly compact design, has the advantage that the adapted surface of an otherwise fixed, substantially non-compliant bearing surface helps to retain the card in the card reading position, and also offers a pleasing, more positive tactile response as the card is inserted into and removed from the card reader.

Preferably the bearing surface comprises a relatively thin coating of compliant, eg. elastomeric material on a plastics substrate. This is particularly advantageous since the card reader can then accommodate appreciable tolerances in both the lateral (width) and thickness dimensions of different cards to be used with the card reader. Furthermore, the compliant, non-abrasive nature of the coating prevents damage to the card as the card moves over the bearing surface. The surface coating may have a textured surface and particularly good results have been achieved with a coating of material comprising neoprene particles in a carrier medium. Such a material has also been found to act as an effective dust trap which can help to prevent dust particles entering the mechanism of the card reader.

In a particular embodiment the bearing surface which is adapted to offer resistance to the card movement also forms a guide surface for guiding the card to the card reading position.

A pair of opposed bearing surfaces may be provided against which respective opposite faces of the card bear during movement of the card to the card reading position. This is particularly advantageous as the card is gripped more firmly to provide an even more positive tactile response during card insertion and also to help retain the card in the card reading position. As mentioned previously the compliant surface coating on the bearing surfaces prevents damage to the card, while being capable of accommodating appreciable variations of card thicknesses. Suitably, two such pairs of opposing bearing surfaces are provided adjacent respective opposite lateral edges of a card inserted into the card reader.

An embodiment of the invention will now be described, by way of example, with reference to the accompanying drawings in which:-
Figure 1 is a cross-section of a card reader in accordance with the invention, showing a carriage in an initial card receiving position,
Figure 2 is a cross-section of the card reader in Figure 1, showing the carriage in a card reading position,
Figure 3 is a side elevation of the card reader showing the mechanism for moving the carriage between the card receiving position and the card reading position,
Figures 4a and 4b are cross-sections of part of the card reader in Figures 1 and 2 showing the contacts in the card receiving and the card reading positions respectively.

In the various Figures the same reference numerals are used to designate like parts.

It is noted here that, for the sake of clarity, the Figures are not drawn to scale. In particular the dimensions are exaggerated in the height direction, i.e. in the direction of card thickness.

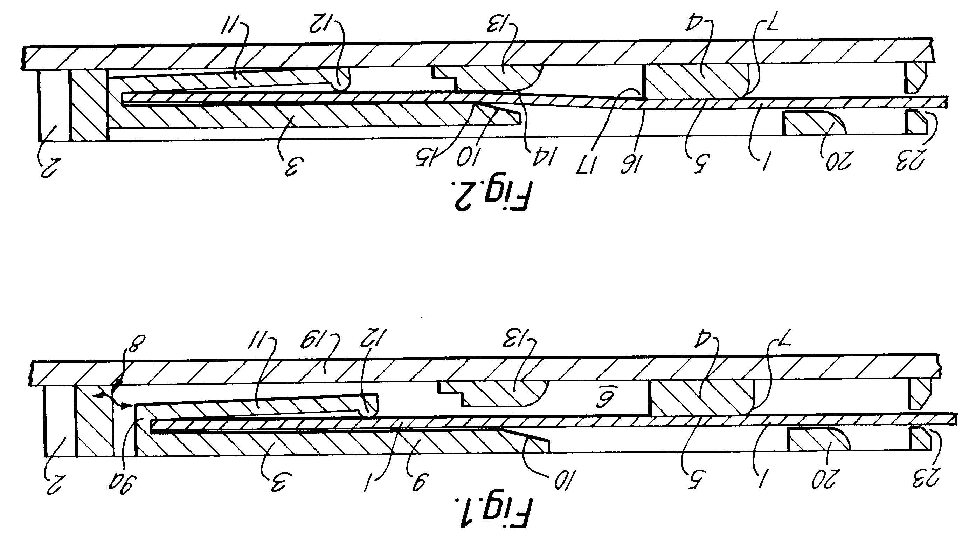

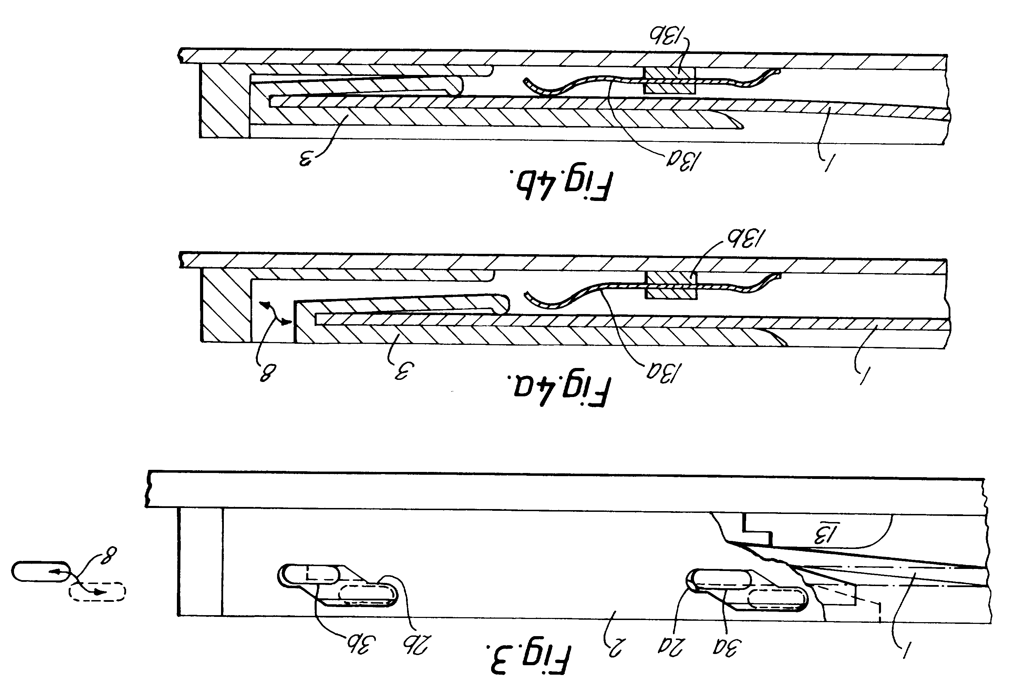

As shown in Figures 1 and 2, a "smart card" 1 can be inserted into a card reader through an entrance slot 23 therein. The card reader comprises a chassis 2 and a carriage 3 arranged for slidable movement in the chassis. Both the carriage and the chassis are made of a plastics material, suitably Polyamide. The chassis 2 defines a main card receiving slot 6 and is mounted on a platform 19, which in practice may be a printed circuit board on which is mounted the circuitry for reading the information stored in the integrated circuit in the smart card 1. An abutment member 4 having an upper card bearing surface 5 is upstanding in the slot 6 in which the carriage 3 is slidably mounted. The abutment member 4 is disposed upstream of the carriage taken in the direction of card insertion. An outer edge 7 of member 4 is radiused or bevelled to guide the card smoothly onto surface 5 when the card is inserted through the slot 23.

A further abutment member 20, which depends from the top of chassis 2, is located between the slot 23 and upstanding member 4. Like member 4, the member 20 also has a card bearing surface (this time on its underside) and a bevelled or radiused front edge so as to guide a card during insertion through the slot defined between members 4 and 20.

Each of the abutment members 4 and 20 may either be a single member extending across the full width of the card reader or alternatively may be in the form of a pair of discrete members disposed adjacent respective opposite lateral edges of a card inserted into the card reader. This latter arrangement has the advantage that the bearing surfaces do not engage the contact pads on the card (which are generally located towards the centre of the card and are particularly vulnerable) and so substantially eliminates the risk of danaging the contact pads during insertion of the card into the card reader or removal therefrom.

In accordance with the invention the bearing surface 5 of the abutment member 4 and the bearing surface of abutment member 20 are both provided with a coating, less than 200 micrometers thick and suitably approximately 75-100 micrometers thick of NEXTEL 3101 (Trade Mark) available for example from G F Haynes & Co. Ltd, Leicester, UK. NEXTEL is composed of microscopic neoprene granules in a carrier medium, and provides a three dimensional textured surface which is soft and warm to the touch, similar to a fabric. This elastomeric surface coating has been found to have remarkable results in helping to grip a card both during insertion into and removal from the card reader, and also it continues to grip when the card is fully inserted into the card reading position. Thus the card reader offers a very pleasing, more positive tactile feel to the user as the card is inserted into the reader, but also the coated bearing surface helps significantly to retain the card in the card reading position and virtually eliminates incidences of the card working lose before it is removed by the user, even under relatively severe conditions of shock and vibration.

It is noted here that NEXTEL 3101 is not promoted for its frictional, but primarily for its visual and durability properties. Indeed the material is advertised as providing an ideal finish for furniture, and office and domestic equipment such as televisions and audio equipment.

The surfaces of the members defining the entrance slot 23 to the card reader may similarly be provided with a coating of NEXTEL 3101. This not only enhances the resistive effect, but has also been found to be effective as a dust-trap to prevent dust entering into the main card-receiving slot 6 where it could otherwise interfere with the smooth operation of the carriage mechanism.

Referring to Figure 3, each side of the carriage 3 has a pair of integral projections 3a,3b accommodated in respective complementary slots or grooves 2a,2b on the chassis sides. The slots or grooves 2a, 2b provide a lazy Z shape and have a camming action to guide the carriage 3 in a lazy Z-shaped path as indicated by the arrows 8 and resulting in the carriage moving from the position shown in Figure 1 to the position shown in Figure 2. In Figure 3 the carriage is shown in solid lines in the card reading position (corresponding to Figure 2), and in broken lines in the initial card receiving position (corresponding to Figure 1). The movement of the carriage is described in more detail below.

Carriage 3 has a substantially rigid top portion 9 with a bevelled edge 10 to facilitate card insertion. It also has a cantilevered finger 11 on its underside with a lip or protuberance 12 at its free end. As card 1 is inserted into the reader it is guided smoothly between members 20 and 4 over the bearing surface 5 and into the carriage 3 whereby the cantilevered finger 11 is slightly deflected to accommodate the card.

A plinth 13, which is also upstanding ir the card receiving slot 6 in the vicinity of the carriage has an upper surface 14 which is a predetermined distance lower than the surface 5 with respect to the floor of slot 6 and the underside of the card 3. In the position shown in Figure 1, card 1 is spaced apart from surface 14. A plurality of fixed contacts (not shown) may be mounted on plinth 13 so that they will be opposite the contact pads (not shown) on card 1 when it is in the card reading position shown in Figure 2. Alternatively, and more preferably, fixed leaf spring contacts 13a project from plinth 13b, in the manner of cantilevers, as shown in Figures 4a and 4b. Plinth 13b may be integral with plinth 13 or it may be a discrete member, separate from plinth 13. These contacts are preferred because they are configured so that their free ends extend above the upper surface 14 of the plinth 13b, i.e. in a resting state, as shown in Figure 4a. They are then resiliently deflected by the card 1 when the card is moved into the card reading position, as shown in Figure 4b. This ensures that good electrical contacts are made.

In operation, the card 1 is inserted through the slot 23, between coated abutment members 20 and 4 and onto the coated card bearing surface 5. Additional members (not shown) providing card bearing surfaces (which may or may not be coated with NEXTEL 3101 may be arranged in sequence between the card insertion slot 23 and the carriage 3. The coated bearing surfaces offer a positive resistance to the movement of the card. The card slides over the bearing surface 5 towards the carriage 3 and into a recess between members 9 and 11 of the carriage 3. Member 11 is slightly deflected and thus provides a slight gripping pressure to prevent the card from being loosely located in the carriage 3. The leading edge of the card eventually abuts a backstop 9a of the carriage so that further insertion of the card 1 causes the carriage 3 to move away from the insertion slot 23 and in the direction shown by arrow 8. The guide slots 2a,2b in the chassis 2 (see Figure 3) cause carriage 3 to move in a lazy Z-shaped path whereby a corner 15 of the bevelled edge 10 on member 9 presses against the back of the card in the region opposite the contact pads (which are on the other face). The lowermost face of the card 1 in this region is therefore forced downwardly towards part of the upper surface 14 of plinth 13, i.e. towards the card reading contacts 13a. Furthermore, another region 16 of the card 1 is urged against the guide surface 5 of abutment member 4 in such manner that the card is caused to bend at the corner 17 of member 4 facing the carriage 3. Member 20 and the upper portion defining the entrance slot 23 maintain the trailing portion of the card in a substantially flat attitude. However, tle effect of the bend in the card at corner 17 of member 4 is to exert a downward spring-like force on the leading portion of the card which is thus moved downwardly in cantilever fashion. Good electrical connections are thereby made between the contact pads on the card and the card reading contacts 13a.

As the card moves into the position shown in Figure 2, it causes an actuator (not shown) of a switch (not shown) to move into a position for energising the electronic circuitry which is provided, e.g. on the printed circuit board 19, for reading the information stored on card 1. A suitable actuator and switch arrangement for this application is disclosed and claimed in our British patent application GB-A-2,210,717.

In the card reading position shown in Figure 2, the free end of the cantilevered finger 11 abuts the floor of slot 6 and is therefore urged upwardly against the under surface of card 1. This helps to retain the card firmly in the slot. Hence, the corner of the levelled edge 15 clamps the card against the surface 14 of plinth 13; the lip 12 of cantilevered finger 11 clamps the card against the body of the carriage 3; and the projections 3a,3b on the side of the carriage 3 are consequently urged upwards against the top defining wall of the bottom limb of the Z-shaped slots or grooves 2a,2b in the chassis walls. The resultant effect of the various forces acting on the carriage and the card in the card reading position not only helps to hold the card firmly in the carriage, but also enables the carriage (and hence the card) to be retained quite firmly in the card reading position. As mentioned previously, the gripping effect of the NEXTEL 3101 coating on the opposed bearing surfaces of abutment members 4 and 20 also helps to retain the card in the card reading position. After use, the card can be released simply by gently pulling the card out of the card reader. As soon as a pulling force is exerted the carriage, aided by a return spring (not shown) eg. as disclosed in our aforementioned British patent application GB-A-2,210,717 is caused to move in the contrary direction along the lazy Z-shaped path 8 determined by the slots or grooves 2a,2b to return the carriage and the card therein to the starting position, i.e. the card receiving position, whereat the card can readily be withdrawn completely from the card reader.

In view of the foregoing description it will be evident to a person skilled in the art that various modifications may be made without departing from the scope of the invention. For example, the abutment member 4 and/or the member 20 and/or the members defining the entrance slot 23 may be integral with the chassis 2, or may be formed separately therefrom, and in particular may be formed as a separate unitary member which is simply assembled relative to the chassis in the location as shown in the Figures.

## Claims

1. A card reader for reading a card (1) comprising information storage means and contact pads connected thereto, the card reader comprising
entrance means (23) for inserting the card (1),
a plurality of contacts (13a) for engaging the contact pads on the card to enable electrical connections to be made for reading information from the card (1),
means (2a, 2b) for guiding the card (1) to a card reading position whereat the contacts (13a) engage the contact pads on the card (1), and
a substantially rigid bearing surface (5) against which the card (1) bears during movement of the card (1) to the card reading position, wherein
the bearing surface (5) comprises a coating of compliant material offering non-abrasive resistance to the movement of the card (1) thereover.

2. A card reader as claimed in claim 1, wherein the bearing surface (5) comprises an elastomeric coating.

3. A card reader as claimed in claim 1 or claim 2, wherein the bearing surface (5) comprises a textured surface coating.

4. A card reader as claimed in claim 3, wherein the textured coating comprises neoprene particles in a carrier medium.

5. A card reader as claimed in any of claims 2 to 4, wherein the textured surface coating is less than 200 micrometers thick and preferably in the range of 75-100 micrometers.

6. A card reader as claimed in any of the preceding claims, wherein the bearing surface (5) is a surface of said guiding means (2a, 2b).

7. A card reader as claimed in any of the preceding claims, comprising means for retaining the card (1) in the card reading position.

8. A card reader as claimed in any of the preceding claims, comprising a pair of opposed substantially rigid bearing surfaces against which respective opposite faces of the card (1) bear during movement of the card (1) to the card reading position, both bearing surfaces being adapted to offer resistance to the movement of the card (1) thereover.

9. A card reader as claimed in any of the preceding claims, comprising a pair of substantially rigid bearing surfaces disposed adjacent respective opposite lateral edges of a card (1) inserted into the card reader, both bearing surfaces being adapted to offer resistance to the movement of the card (1) thereover.

## Revendications

1. Lecteur de carte pour lire une carte (1) comprenant un moyen de mémorisation d'informations et des plots de contact connectés à celui-ci, le lecteur de carte comprenant :
un moyen d'entrée (23) pour insérer la carte (1), une pluralité de contacts (13a) pour contacter les plots de contact sur la carte afin de permettre que les connexions électriques soient établies pour lire les informations à partir de la carte (1), un moyen (2a, 2b) pour guider la carte (1) à une position de lecture de carte tandis que les contacts (13a) contactent les plots de contact sur la carte (1), et
une surface de support sensiblement rigide (5) contre laquelle la carte (1) porte pendant le déplacement de la carte (1) à la position de lecture de carte, dans laquelle
la surface de support (5) comprend un revêtement d'un matériau élastique offrant une résistance non abrasive au déplacement de la carte (1) sur celle-ci.

2. Lecteur de carte selon la revendication 1, dans lequel la surface de support (5) comprend un revêtement d'élastomère.

3. Lecteur de carte selon la revendication 1 ou la revendication 2, dans lequel la surface de support (5) comprend un revêtement de surface texturé.

4. Lecteur de carte selon la revendication 3, dans lequel le revêtement texturé comprend des particules de néoprène dans un milieu porteur.

5. Lecteur de carte selon l'une quelconque des revendications 2 à 4, dans lequel le revêtement de surface texturé est d'une épaisseur inférieure à 200 micromètres et est de préférence d'une épaisseur située dans la plage de 75 à 100 micromètres.

6. Lecteur de carte selon l'une quelconque des revendications précédentes, dans lequel la surface de support (5) est une surface dudit moyen de guidage (2a, 2b).

7. Lecteur de carte selon l'une quelconque des revendications précédentes, comprenant un moyen pour maintenir la carte (1) dans la position de lecture de carte.

8. Lecteur de carte selon l'une quelconque des revendications précédentes, comprenant une paire de surfaces de support sensiblement rigides opposées contre lesquelles des faces respectives opposées de la carte (1) portent pendant le déplacement de la carte (1) à la position de lecture de carte, les deux surfaces de support étant prévues pour offrir une résistance au déplacement de la carte (1) sur celles-ci.

9. Lecteur de carte selon l'une quelconque des revendications précédentes, comprenant une paire de surfaces de support sensiblement rigides disposées adjacentes aux bords latéraux opposés respectifs d'une carte (1) insérée dans le lecteur de carte, les deux surfaces de support étant prévues pour offrir une résistance au déplacement de la carte (1) sur celles-ci.

## Patentansprüche

1. Kartenleser zum Lesen einer Karte (1) mit einer Informationsspeichereinrichtung und mit mit dieser verbundenen Kontaktflecken, der folgendes aufweist:
- eine Einlaßeinrichtung (23) zum Einführen der Karte (1);
- mehrere Kontakte (13a) zum Kontaktieren der Kontaktflecke auf der Karte, um die Herstellung elektrischer Verbindungen zum Auslesen von Information aus der Karte (1) zu ermöglichen;
- eine Einrichtung (2a, 2b) zum Führen der Karte (1) in eine Kartenleseposition, in der die Kontakte (13a) die Kontaktflecke auf der Karte (1) kontaktieren; und
- eine im wesentlichen steife Andrückfläche (5), gegen die die Karte (1) während ihrer Bewegung in die Kartenleseposition drückt;
- wobei die Andrückfläche (5) eine Beschichtung aus einem nachgiebigen Material aufweist, das der Bewegung der Karte (1) über sie eine Widerstandskraft entgegenstellt, ohne daß Abrieb auftritt.

2. Kartenleser nach Anspruch 1, bei dem die Andrückfläche (5) eine elastomere Beschichtung aufweist.

3. Kartenleser nach Anspruch 1 oder Anspruch 2, bei dem die Andrückfläche (5) eine texturierte Oberflächenbeschichtung aufweist.

4. Kartenleser nach Anspruch 3, bei dem die texturierte Beschichtung Neoprenteilchen in einem Trägermedium aufweist.

5. Kartenleser nach einem der Ansprüche 2 bis 4, bei dem die texturierte Oberflächenbeschichtung weniger als 200 Mikrometer dick ist, wobei sie vorzugsweise im Bereich von 75 - 100 Mikrometern liegt.

6. Kartenleser nach einem der vorstehenden Ansprüche, bei dem die Andrückfläche (5) eine Fläche der Führungseinrichtung (2a, 2b) ist.

7. Kartenleser nach einem der vorstehenden Ansprüche, mit einer Einrichtung zum Festhalten der Karte (1) in der Kartenleseposition.

8. Kartenleser nach einem der vorstehenden Ansprüche, mit einem Paar einander gegenüberstehender, im wesentlichen steifer Andrückflächen, gegen die jeweils entgegengesetzte Flächen der Karte (1) während der Verstellung der Karte (1) in die Kartenleseposition drücken, wobei beide Andrückflächen so ausgebildet sind, daß sie der Bewegung der Karte (1) über sie eine Widerstandskraft entgegensetzen.

9. Kartenleser nach einem der vorstehenden Ansprüche, mit einem Paar im wesentlichen steifer Andrückflächen, die benachbart zu jeweils entgegengesetzten Querquanten einer in den Kartenleser eingeführten Karte (1) angeordnet sind, wobei die beiden Andrückflächen so ausgebildet sind, daß sie der Bewegung der Karte (1) über sie eine Widerstandskraft entgegensetzen.
